# EUROPÄISCHE PATENTANMELDUNG

(11) **EP 1 195 220 A2**
(43) Veröffentlichungstag der Anmeldung: **10.04.2002**
(21) Anmeldenummer: 01123628.8
(22) Anmeldetag: 02.10.2001
(51) Int. Cl.: B23K 37/053, B23K 9/028

(54) **Automatische Rundnahtschweissmaschine**

(30) Priorität: 04.10.2000 DE 10049051
(71) Anmelder: Lingemann, H.F., 57074 Siegen (DE)
(72) Erfinder: Lingemann, H.F., 57074 Siegen (DE)
(74) Vertreter: Valentin, Ekkehard, Dipl.-Ing.

(57) **Zusammenfassung**

Bei einer automatischen Rundnahtschweißmaschine, umfassend eine Vorrichtung (8) zum Zentrieren und Festspannen von Hohlkörpern (2; 4), insbesondere Rohren, Endböden, Schüssen oder dergleichen, die an den Mantel des Hohlkörpers anstellbare Spannelemente besitzt, weist die Zentrier- und Spannvorrichtung (8) mehrere separate, umfangsverteilt im Abstand voneinander angeordnete, gesteuerte Verstelleinrichtungen (9) mit einem Wegmeßmittel (19) auf, die mit zentrisch zur Maschinenachse (14) ausgerichteten Kontaktmitteln (13) versehen und zum Verstellen über die gesamte Bandbreite der verschiedenen Hohlkörper-Durchmesser ausgebildet sind.

## Beschreibung

Die Erfindung betrifft eine automatische Rundschweißnahtmaschine, umfassend eine Vorrichtung zum Zentrieren und Festspannen von Hohlkörpern, insbesondere Rohren, Endböden, Schüssen oder dergleichen, die an den Mantel des Hohlkörpers anstellbare Spannelemente besitzt.

Die durch Rundwalzen von Blechen, gezogenen oder durch andere Verfahren hergestellten Rohre bzw. Hohlkörper sind abgelängt und können wahlweise zu einem Behälter von bestimmter Länge durch stirnseitiges Verschweißen miteinander verbunden werden. Abgeschlossen werden diese aus Hohlkörpern zusammengesetzten Behälter in der Regel mit einem gewölbten Boden bzw. Deckelteil, z.B. Klöpper- oder Korbboden. Die Länge und der Durchmesser der Behälter sind von deren Anwendung abhängig. Stets ist es jedoch erforderlich, die miteinander zu verschweißenden Rohre bzw. Böden zu zentrieren und die Stirnflächen planparallel auszurichten.

Durch die DE 31 13 370 A1 ist eine Zentrier- und Festspannvorrichtung mit einem im Behälterbau üblichen, sogenannten Schweißring bekanntgeworden, der aus einem großen Ring bzw. einer Doppelringanordnung bestehen kann, die axial mittels einer hydraulischen Verschiebeeinrichtung zusammenführbar und voneinander abrückbar sind. Der Schweißring selbst setzt sich aus aneinandergelenkten Halbringen oder Kreissegmenten zusammen, die sich mittels Spannelementen zusammenziehen lassen, nachdem sie sich außen an die Hohlkörper angelegt haben. Durch Drehen der Ringanordnung lassen sich die Schweißnähte kontinuierlich setzen, ohne die Schweißköpfe bewegen zu müssen, wobei ein Schweißen aber nur von innen und somit nicht bei geschlossenen Behältern möglich ist.

Die Spann- und Zentriersegmente müssen allerdings dem Durchmesser der Hohlkörper sehr genau angepaßt werden, so daß für jeden Durchmesser verschiedene Segmente bereitgehalten werden müssen. Bei den vielen für die jeweiligen Anwendungsfälle unterschiedlichen Durchmessern muß deshalb eine Vielzahl solcher Segmente vorhanden sein, wobei jeder Übergang auf einen anderen Rohrdurchmesser einen Umbau erfordert.

Aus der US 4 432 486 A ist es bekannt, in die den Hohlkörper umschließenden Halbringe des Schweißrings eine Vielzahl von Preßstempeln vorzusehen. Zur radialen Anstellbarkeit ist jedem Preßstempel ein schwenkbar aufgehängter Hydraulikzylinder zugeordnet, der über Gelenkhebel an den jeweiligen Stempel angreift. Trotz eines somit sehr großen baulichen Aufwandes wird hier doch nur eine äußerst begrenzte radiale Anstellbarkeit erreicht, die beim Verschweißen von Rohren mit einem außerhalb des begrenzten Anstellweges liegenden Durchmessern dann ebenfalls einen Umbau voraussetzt, wozu natürlich ebenfalls eine Vielzahl von unterschiedlichen Halbringen mit darin integrierten Preßstempeln bevorratet werden muß.

Mit der DE 40 06 900 A1 wird als weitere Entwicklung vorgeschlagen, bei einem aus einen Außen- und einen gegenüber diesem relativ verdrehbaren Innenring bestehenden Schweißring an entweder den Außen- oder den Innenring verschwenkbare Spannelemente mit Spannbacken anzulenken. Diese verlaufen in einem spitzen Winkel zur radialen Verbindungslinie der Anlenkungspunkte mit dem Mittelpunkt der Ringanordnung und stellen eine nach Art einer Irisblende arbeitende Zentrier- und Spannvorrichtung zur Verfügung. Die Bandbreite in den Durchmessern der zu zentrierenden und zu spannenden Rohre ist aber auch hier von der begrenzten Länge der als Hebel ausgebildeten, verschwenkbaren Spannelemente abhängig.

Der Erfindung liegt daher die Aufgabe zugrunde, bei einer automatischen Rundnahtschweißmaschine der eingangs genannten Art eine Zentrier- und Festspannvorrichtung zu schaffen, die sich flexibel einsetzen läßt und beim Übergang auf einen anderen Durchmesser der zu verschweißenden Hohlkörper bzw. Rohre keinen Umbau erfordert.

Diese Aufgabe wird erfindungsgemäß dadurch gelöst, daß die Zentrier- und Spannvorrichtung mehrere separate, umfangsverteilt im Abstand voneinander angeordnete, gesteuerte Verstelleinrichtungen mit einem Wegmeßmittel aufweist, die mit zentrisch zur Maschinenachse ausgerichteten Kontaktmitteln versehen und zum Verstellen über die gesamte Bandbreite der verschiedenen Hohlkörper-Durchmesser ausgebildet sind. Indem sich die Erfindung somit völlig von dem vorgezeichneten Entwicklungen eines umfangsgeschlossenen Schweißringes zum Zentrieren und Festspannen der Hohlkörper abwendet und statt dessen vereinzelt angeordnete Verstelleinrichtungen mit sich an den Außenumfang der zu verschweißenden Hohlkörper punktuell anlegenden, gezielt zentrisch zur Maschinenachse ausgerichteten Kontaktmitteln vorsieht, wird die bei Schweißringen ansonsten unvermeidliche Abhängigkeit und Begrenzung bezüglich der Durchmesser der Hohlkörper beseitigt. Denn die Verstelleinrichtungen bzw. die Kontaktmittel lassen sich unbehindert voneinander vom größten auf den kleinsten Durchmesser linear und zentrisch zur Maschinenachse ausgerichtet verstellen.

Ein ansonsten zwingend notwendiger Umbau der Zentrier- und Spannvorrichtung ist damit entbehrlich, und wegen der hohen Flexibilität ist eine mit einer solchen Zentrier- und Spannvorrichtung ausgerüstete Rundnahtschweißmaschine besonders auch zum Verarbeiten von kleinen Losgrößen geeignet, d.h. zum Verschweißen von gegebenenfalls nur wenigen Behältern mit dem gleichen Durchmesser bzw. Querschnitt. Beim Übergang auf ein anderes Durchmessermaß brauchen die Verstelleinrichtungen lediglich entsprechend mehr oder weniger vor bzw. zurückgestellt zu werden.

Als Kontaktmittel lassen sich vorteilhaft Stege oder Rollen bzw. sonstige zylindrische Körper vorsehen, wobei zylindrische Körper wie Rollen das Drehen des zu schweißenden Behälters begünstigen.

Nach Ausgestaltungen der Erfindung wird vorgeschlagen, daß jeder Verstelleinrichtung eine Steuerung zugeordnet ist, alternativ alle Verstelleinrichtungen an eine gemeinsame Steuerung angeschlossen sind. Bei einer übergeordneten gemeinsamen Steuerung ergibt sich ein Gleichlauf aller Verstelleinrichtungen, wobei im Rahmen einer integrierten Folgesteuerung zunächst nur die unteren Verstelleinrichtungen angestellt bzw. hochgefahren werden könnten, um oben einen offenen Freiraum zum einfacheren Einlegen des Rohres bzw. der Böden zu schaffen. Dieser letzte Effekt läßt sich natürlich auch bei separaten Steuerungen erreichen, die weiterhin aber auch begünstigen, daß nicht zentrische, beispielsweise eckige oder ovale Körper zum Schweißen zentriert und gespannt werden können. Weiterhin läßt sich die Zwangseinspannung auch gezielt aufheben, z.B. einzelne Verstelleinrichtungen geringfügig auffahren, um damit beim Schweißen aufgrund der Wärmeeinwirkung auftretenden Spannungen zu begegnen.

Eine bevorzugte Ausführung der Erfindung sieht vor, daß die Verstelleinrichtungen mit einer Zylindereinheit ausgebildet sind, die an jeweils eine Kopfplatte mit mindestens einem von dieser getragenen Kontaktmittel angreifen, wobei vorzugsweise jeweils zwei Verstelleinrichtungen einander gegenüberliegend angeordnet sind. Hierbei reichen zwei Paar und somit insgesamt vier Verstelleinrichtungen mit folglich wenigstens vier sich an den Mantel des zu verspannenden Hohlkörpers punktuell anlegenden Kontaktmitteln aus, um die notwendige Zentrier- und Spannwirkung zu gewährleisten. Grundsätzlich reichen aber bereits drei umfangsverteilt angeordnete Verstelleinrichtungen aus, weil der Kreis damit von der Lage her definiert ist. Zum Anstellen lassen sich statt der hydraulischen oder pneumatischen Zylindereinheiten ebenfalls mechanische Verstellmittel wie ein Spindelantrieb einsetzen.

Es wird vorgeschlagen, daß die Kopfplatte über zwei parallel zueinander angeordnete Stangen in Buchsen geführt ist. Die Zwei-Stangenführung verhindert, daß Verkantungen und davon beim Zentrieren und Spannen hervorgerufene Abweichungen auftreten.

Weitere Einzelheiten und Vorteile der Erfindung ergeben sich aus den Ansprüchen und der nachfolgenden Beschreibung eines in den Zeichnungen dargestellten Ausführungsbeispiels der Erfindung. Es zeigen:
- Fig. 1: in schematischer Draufsicht und aus Vereinfachungsgründen ohne die Schweißeinrichtungen dargestellt eine als solche hinlänglich bekannte automatische Rundnahtschweißmaschine mit Ein- und Ausbringung der miteinander zu verschweißenden Hohlkörper;
- Fig. 2: als Einzelheit der Rundnahtschweißmaschine nach Fig. 1 in der Vorderansicht eine Zentrier- und Spannvorrichtung; und
- Fig. 3: in schematischer Draufsicht als Einzelheit eine Verstelleinrichtung der Zentrier- und Spannvorrichtung nach Fig. 2.

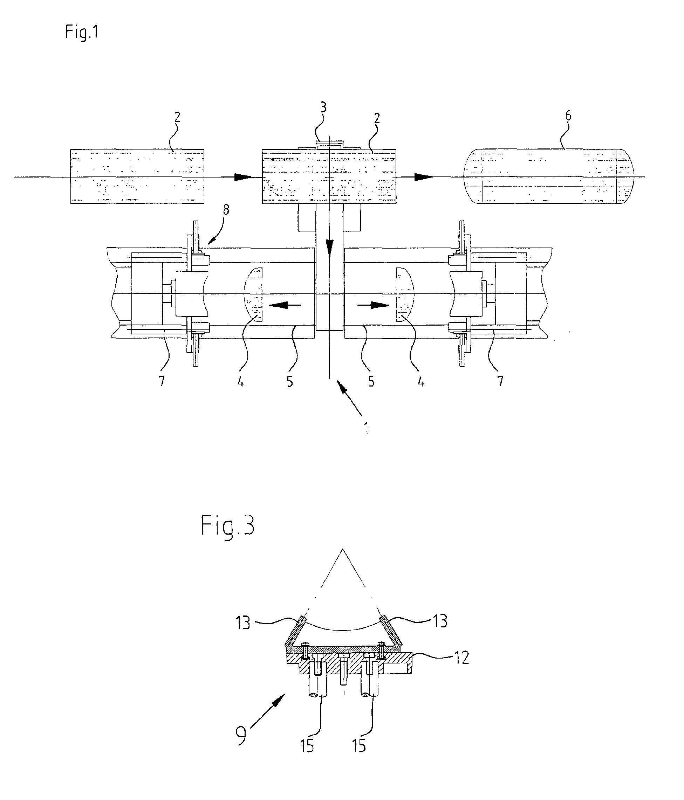

Eine in Fig. 1 dargestellte Rundnahtschweißmaschine 1 wird mit einem Hohlkörper bzw. Rohr 2 beschickt, das mittels eines Hubtisches 3 zum Verschweißen mit zuvor beladenen Böden 4 auf das Maschinenbett 5 der Rundnahtschweißmaschine 1 eingebracht wird. Nach dem Verschweißen des Rohres 2 mit den Böden 4 wird der fertige Behälter 6 in umgekehrter Weise ausgefördert und abtransportiert. Zum Anpassen der Rundnahtschweißmaschine 1 an unterschiedliche Längen der zugeführten Rohre 2 sind an beiden Enden des Maschinenbettes 5 aufeinander zu und voneinander weg bewegliche Maschinenwagen 7 angeordnet. Diese tragen auch eine Zentrier- und Spannvorrichtung 8, mit denen sich die Böden 4 lagegenau zu dem zugeführten Rohr 2 ausrichten und verspannen lassen, was für das Setzen einer ordnungsgemäßen Schweißnaht von großer Bedeutung ist.

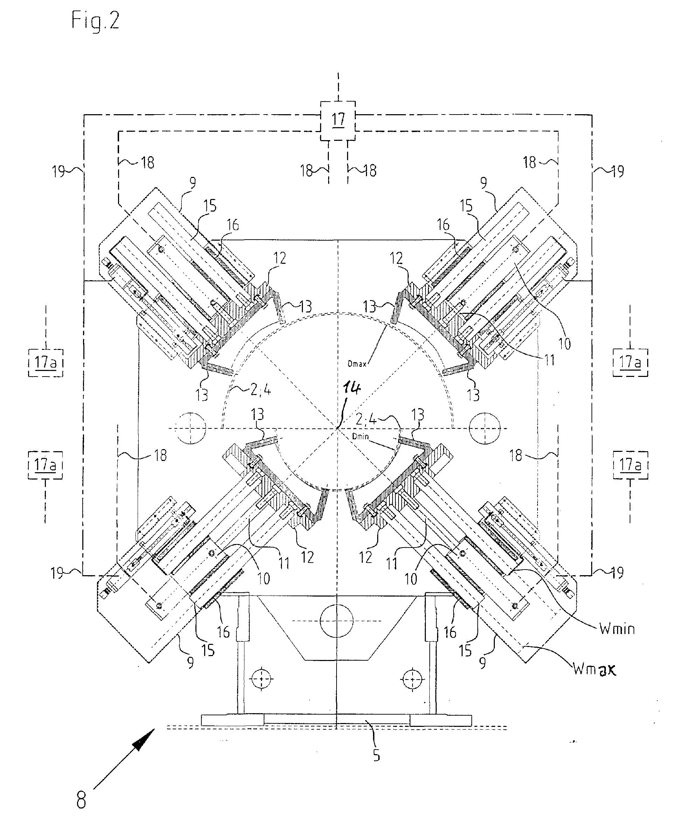

Jede Zentrier- und Spannvorrichtung 8 besteht in der Ausführung nach Fig. 2 aus vier räumlich getrennten, im Abstand voneinander angeordneten separaten Verstelleinrichtungen 9. Diese besitzen einen an eine nicht gezeigte Druckmittelversorgungsquelle angeschlossenen pneumatischen oder hydraulischen, stationären Zylinder 10, der mit seiner Zylinderstange 11 an eine Kopfplatte 12 angreift. Die Kopfplatten 12 sind mit jeweils zwei Stegen 13 - alternativ Rollen oder dergleichen - versehen, die zentrisch zur Maschinenachse 14 ausgerichtet sind. Zur präzisen Führung sind die Kopfplatten 12 über zwei parallel zueinander angeordnete Stangen 15 in Buchsen 16 gelagert (vgl. auch Fig. 3).

Die in ihrer Anordnung untereinander keinem Zwang unterliegenden Verstelleinrichtungen können zum Gleichlauf bei Einstellungen auf einen anderen Rohrdurchmesser über eine übergeordnete Steuerung 17 miteinander verknüpft werden; alternativ läßt sich; wie angedeutet, einer jeden Verstelleinrichtung 9 eine separate Steuerung 17a zuordnen. Die von den Zylindern 10 zu der Steuerung 17 führenden Steuerlinien 18 sind schematisch gestrichelt eingezeichnet. Wie der Einfachheit halber lediglich strichpunktiert angedeutet, ist an die Steuerung 17 weiterhin eine Wegmeßeinrichtung 19 angeschlossen, die bei Einstellbewegungen das exakte Positionsmaß im Bereich von Wmin bis Wmax angibt. Mit der Zentrier- und Spannvorrichtung 8 ist es mittels der Verstelleinrichtungen 9 somit möglich, die Stege 13 unbegrenzt in der Bandbreite Dmax bis Dmin der miteinander zu verschweißenden Hohlkörper, d.h. Rohre 2 und Böden 4 zu verstellen. Diese ungehinderte und auf den jeweiligen Rohrdurchmesser exakt festzulegende Zentrier- und Spannposition wird in Fig. 2 durch mehrere Zwischenpositionen - ausgehend von Dmax bis Dmin - verdeutlicht.

Bei jedem Rohrdurchmesser legen die sich zentrisch zur Maschinenachse 14 hin bzw. von dieser weg verlagernden Stege 13 präzise an den Außenmantel der Böden 4 oder Rohre 2 an. Eine jeweils neue Bestückung der Rundnahtschweißmaschine 1 mit stets nur einen begrenzten Durchmesserbereich bewältigenden Zentrier- und Spannvorrichtungen, wie an den bekannten Maschinen verwirklicht, ist damit nicht mehr erforderlich. Die Zentrier- und Spannvorrichtung 8 läßt sich zudem ohne weiteres auch in bereits bestehenden Rundnahtschweißmaschinen nachrüsten.

## Patentansprüche

1. Automatische Rundnahtschweißmaschine, umfassend eine Vorrichtung zum Zentrieren und Festspannen von Hohlkörpern, insbesondere Rohren, Endböden, Schüssen oder dergleichen, die an den Mantel des Hohlkörpers anstellbare Spannelemente besitzt,
**dadurch gekennzeichnet,**
**daß** die Zentrier- und Spannvorrichtung (8) mehrere separate, umfangsverteilt im Abstand voneinander angeordnete, gesteuerte Verstelleinrichtungen (9) mit einem Wegmeßmittel (19) aufweist, die mit zentrisch zur Maschinenachse (14) ausgerichteten Kontaktmitteln (13) versehen und zum Verstellen über die gesamte Bandbreite (Dmax bis Dmin) der verschiedenen Hohlkörper-Durchmesser ausgebildet sind.

2. Rundnahtschweißmaschine nach Anspruch 1,
**gekennzeichnet durch**
Stege als Kontaktmittel (13).

3. Rundnahtschweißmaschine nach Anspruch 1,
**gekennzeichnet durch**
Rollen als Kontaktmittel (13).

4. Rundnahtschweißmaschine nach einem der Ansprüche 1 bis 3,
**dadurch gekennzeichnet,**
**daß** jeder Verstelleinrichtung (9) eine Steuerung (17a) zugeordnet ist.

5. Rundnahtschweißmaschine nach einem der Ansprüche 1 bis 3,
**dadurch gekennzeichnet,**
**daß** die Verstelleinrichtungen (9) an eine gemeinsame Steuerung (17) angeschlossen sind.

6. Rundnahtschweißmaschine nach einem der Ansprüche 1 bis 5,
**dadurch gekennzeichnet,**
**daß** die Verstelleinrichtungen (9) mit einer Zylindereinheit (10) ausgebildet sind, die an jeweils eine Kopfplatte (12) mit mindestens einem von dieser getragenen Kontaktmittel (13) angreifen.

7. Rundnahtschweißmaschine nach Anspruch 6,
**dadurch gekennzeichnet,**
**daß** die Kopfplatte (12) über zwei parallel zueinander angeordnete Stangen (15) in Buchsen (16) geführt ist.

8. Rundnahtschweißmaschine nach einem der Ansprüche 1 bis 7,
**dadurch gekennzeichnet,**
**daß** jeweils zwei Verstelleinrichtungen (9) einander gegenüberliegend angeordnet sind.
